# EUROPÄISCHE PATENTSCHRIFT

(11) **EP 0 907 482 B1**
(45) Veröffentlichungstag und Bekanntmachung des Hinweises auf die Patenterteilung: **07.03.2001**
(21) Anmeldenummer: 97924847.3
(22) Anmeldetag: 13.06.1997
(51) Int. Cl.: B29C 45/12

(54) **SPRITZGIESSANLAGE**
INJECTION MOULDING INSTALLATION
INSTALLATION DE MOULAGE PAR INJECTION

(30) Priorität: 14.06.1996 CH 149096
(43) Veröffentlichungstag der Anmeldung: 14.04.1999
(73) Patentinhaber: Otto Hofstetter AG, 8730 Uznach (CH)
(72) Erfinder: HOFSTETTER, Otto, CH-8730 Uznach (CH); FERNANDEZ, Luis, CH-8730 Uznach (CH)
(74) Vertreter: Ritscher, Thomas, Dr.Rer.Nat.Dipl.-Chem.
(86) Internationale Anmeldenummer: CH9700235
(87) Internationale Veröffentlichungsnummer: WO9748540

(56) Entgegenhaltungen:
- DE-A- 1 948 074
- FR-A- 2 294 041
- FR-A- 2 295 832
- US-A- 4 983 117
- PATENT ABSTRACTS OF JAPAN vol. 9, no. 319 (M-439) [2042] , 14.Dezember 1985 & JP 60 154024 A (FUJI SHASHIN FILM KK), 13.August 1985,
- PATENT ABSTRACTS OF JAPAN vol. 8, no. 22 (M-272) [1459] , 31.Januar 1984 & JP 58 183231 A (TOSHIBA KIKAI KK), 26.Oktober 1983,

## Beschreibung

Die vorliegende Erfindung betrifft eine Spritzgiessanlage für die Herstellung von Formteilen aus plastifiziertem Kunststoff gemäss Oberbegriff des Anspruchs 1.

Derartige Spritzgiessanlagen kommen heutzutage in der Kunststofftechnologie überall zur Anwendung und umfassen grundsätzlich ein Spritzaggregat und eine Schliesseinheit, wobei die Spritzaggregate mehr oder weniger aufwendige Maschinen zum Plastifizieren und Einspritzen aufweisen. Die Schliesseinheiten sind in der Regel hydraulisch oder pneumatisch betrieben, mit auswechselbaren Formwerkzeugen ausgerüstet und so angeordnet, dass deren Platten senkrecht zur Förderrichtung der Plastifiziervorrichtung stehen, d.h. sich in Förderrichtung öffnen und schliessen lassen.

Um die Produktion derartiger Formteile zu erhöhen, ist schon verschiedentlich vorgeschlagen worden, die Schliess-einheiten so zu gestalten, dass zwei oder mehr Formwerkzeuge gleichzeitig oder im Wechsel mit der gewünschten Menge an Kunststoffschmelze beschickt werden können. Bei diesen Schliesseinheiten, wie bspw. in der US-5'464'579 oder US-5'370'523 beschrieben, wird die Kunststoffschmelze mitten durch mindestens eines der Formwerkzeuge in einen Verteilerblock gefördert, um von dort den jeweiligen düsenseitigen Werkzeugplatten zugeführt zu werden. Die Zuführung der Schmelze zentral durch einen Teil der Werkzeugplatten erfordert speziell konstruiert Formwerkzeuge, welche die Produktion der Formteile verteuern.

Es ist deshalb bspw. aus der WO 95/08428 bekannt, die Kunststoffschmelze zur Mehrfach-Schliesseinheit um die Formwerkzeuge herumzuführen und in eine mittlere Formaufspannplatte zu leiten. Dabei kann diese mittlere Formaufspannplatte ortsfest montiert sein oder, wie bei der als Tandem-Maschine bekannten Mehrfach-Schliesseinheit, verschiebbar konstruiert sein. Diese mit einer seitlich versetzten Spritzeinheit arbeitenden Schliess-Einheiten erlauben die Verwendung von Standardwerkzeugen und damit die Reduktion der Produktionskosten. Leider zeigt es sich, dass diese seitlich versorgten Mehrfach-Schliesseinheiten bei der Verwendung von Werkzeugen, die für die gleichzeitige Herstellung von 48 und mehr Formteilen geeignet sind, zum Teil lecken und rascher verschleissen, als die zentral versorgten Schliesseinheiten und deshalb intensiver gewartet werden müssen.

In der FR 2 294 041 wird eine Kolben-Spritzgiessmaschine beschrieben, bei welcher ein vertikal angeordneter - im folgenden Dosier- und Fördervorrichtung genannter - Kolben zur Dosierung und Förderung der Schmelze mit einer festen Werkzeug-Aufspannplatte zusammenwirkt. Diese Aufspannplatte ist auf einem Sockel abgestützt und verteilt die eingespritzte Schmelze in zwei flankierend angeordnete Spritzgiess-Werkzeuge mit mehreren Kavitäten. Derartige Kolben-Spritzgiessmaschinen eignen sich nicht für die gleichzeitige Herstellung von 48 und mehr hülsenförmigen Vorformlingen aus PET, wie sie heute von der Getränkeindustrie verwendet werden. Diese Kolben-Spritzgiessmaschinen werden heute nur noch zur Herstellung von Kleinstteilen verwendet. Nachteilig bei diesen Maschinen ist dabei auch der durch das verzweigte Anguss-System bedingte Materialverlust, der heute durch Heisskanal-Systeme vermieden wird.

Das allgemeine Fachwissen zu derartigen Spritzgiessanlagen und insbesondere zur Bedeutung der hier verwendeten Begriffe, insbesondere "Spritzaggregat", "Maschinenplatte", "Werkzeugplatte", etc. ist bspw. aus dem Kunststoff Taschenbuch, Saechtling, Carl Hanser Verlag, bekannt.

Es ist deshalb Aufgabe der vorliegenden Erfindung eine mit Standardwerkzeugen ausrüstbare Mehrfach-Schliesseinheit mit hoher Funktionsfähigkeit, d.h. geringem Wartungsaufwand, zu schaffen. Insbesondere sollen damit bewährte Mehrfachwerkzeuge mit bspw. 48 und mehr Formkavitäten betriebssicher arbeiten können.

Erfindungsgemäss wird dies mit einer Spritzgiessanlage gemäss Anspruch 1 erreicht und insbesondere durch eine Anordnung von Spritzaggregat und Schliesseinheit, derart, dass die Förderrichtung des Spritzaggregats und die Schliessrichtung der Werkzeuge senkrecht zueinander stehen. Es erweist sich als besonders wichtig für den erfindungsgemässen Aufbau, dass die mittlere Aufspannplatte direkt in der Förderrichtung steht und als feste Maschinenplatte ausgebildet ist. Ebenso wichtig ist die paarweise Anordnung der Werkzeugplatten, damit sich die durch den Spritzdruck erzeugten Kräfte jeweils gegenseitig kompensieren zu können. Damit erhält die gesamte Schliesseinheit eine hohe mechanische Stabilität und werden insbesondere durch den für die Zufuhr der Schmelze benötigten Spritzdruck keine Biegemomente innerhalb oder zwischen den einzelnen Werkzeugplatten erzeugt.

mittels bewährten Werkzeugen mit 48 oder mehr Formkavitäten, betriebssicher und verschleissarm herzustellen. Weitere vorteilhafte Ausgestaltungen der erfindungsgemässen Spritzgiessanlage ergeben sich auch aus den vorliegenden Unteransprüchen.

Im folgenden soll die Erfindung anhand von Ausführungsbeispielen und mit Hilfe der Figuren näher erläutert werden. Dabei zeigen:
- Fig. 1: Aufsicht auf eine erfindungsgemäss angeordnete Schliesseinheit einer Spritzgiessanlage;
- Fig. 2: Aufsicht auf eine erfindungsgemäss angeordnete Schliesseinheit einer Spritzgiessanlage mit zwei Spritzaggregaten; und
- Fig. 3: Aufsicht auf eine erfindungsgemäss angeordnete Schliesseinheit einer Spritzgiessanlage mit drei Spritzaggregaten.

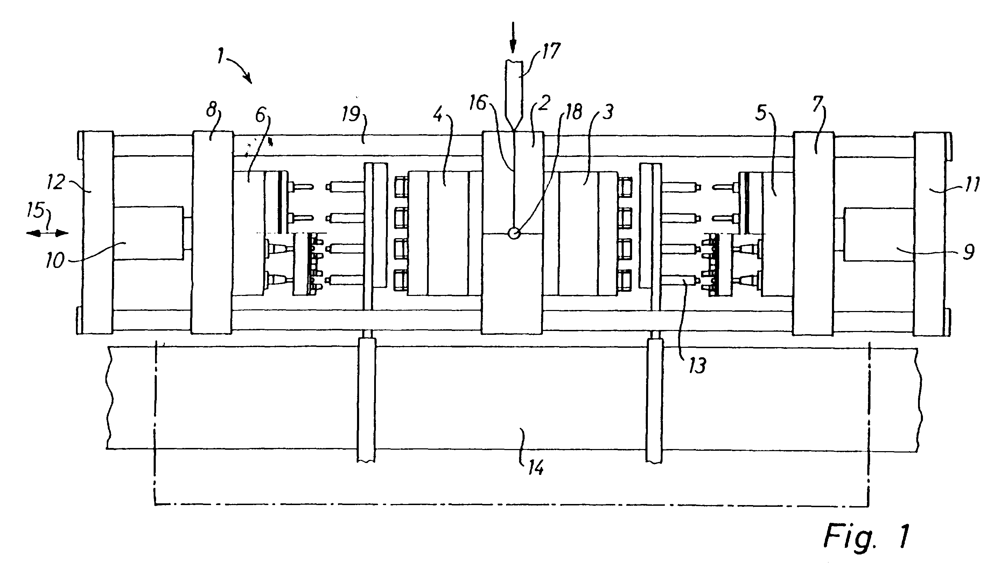

Die in Figur 1 dargestellte Schliesseinheit 1 weist zentral eine feste Maschinenplatte auf, die im folgenden auch Verteilerplatte 2 genannt wird. Beidseitig dieser festen Verteilerplatte 2 sind je eine Werkzeugplatte (Matrize) 3, 4 fest mit dieser Verteilerplatte 2 verbunden. Eine zu den jeweiligen Werkzeugplatten 3, 4 gehörende bewegliche Werkzeugplatte (Patrize) 5, 6 ist an je einer beweglichen Maschinenplatte 7, 8 befestigt. Diese beweglichen Maschinenplatten 7, 8 sind an Holmen 19 geführt und werden über Hydrauliksysteme 9, 10 bewegt, die an Grundplatten 11, 12 abgestützt sind. In der vorliegenden Figur ist darüberhinaus ein Entnahmesystem 13 dargestellt, mit welchem die gespritzten Formteile aus dem Werkzeug entnommen und auf ein Förderband 14 ausgeworfen werden können. Wesentlich für die vorliegende Erfindung ist es, dass die Schliessrichtung 15 senkrecht zur Förderrichtung 16 des Spritzaggregats 17 steht. Diese Anordnung erlaubt es, die beiden paarweise angeordneten Werkzeuge 3,5; 4,6 entweder im Gleichtakt oder mit Hilfe eines geeigneten Ventils 18 abwechselungsweise zu betreiben. Durch diese paarweise Anordnung der Werkzeuge 3,5; 4,6 kompensieren sich die durch den Förderdruck auf diese Werkzeuge erzeugten Kräfte und können keine Biegemomente innerhalb der Schliesseinheit 1 erzeugt werden.

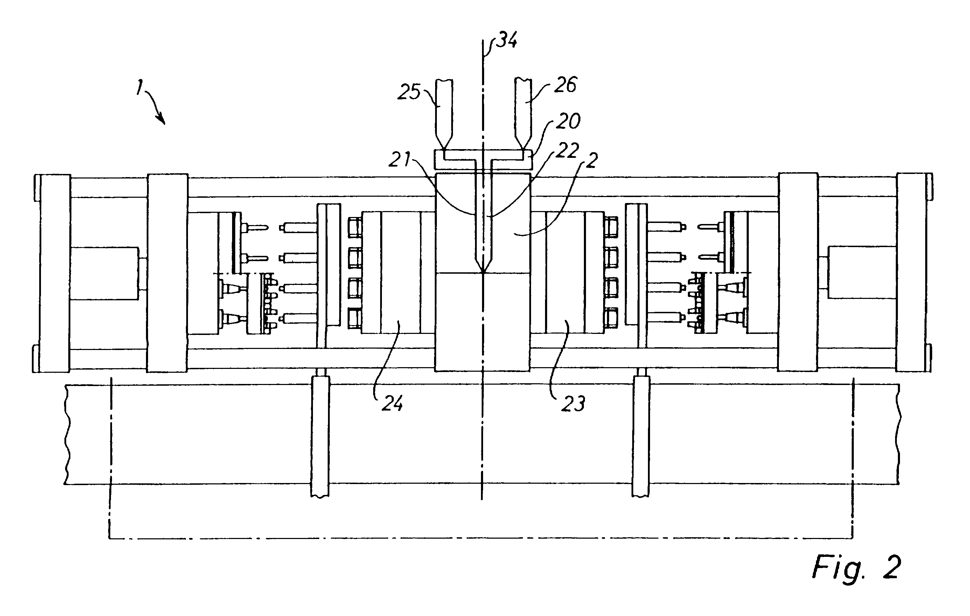

Die in Figur 2 dargestellte Schliesseinheit 1 unterscheidet sich von der in Figur 1 dargestellten Schliesseinheit lediglich dadurch, dass die feste Verteilerplatte 2 (Maschinenplatte) von zwei Spritzaggregaten 25 und 26 versorgt wird. Um Biegemomente bei dieser Anordnung zu vermeiden, ist zwischen den Spritzaggregaten 25, 26 und der festen Maschinenplatte 2 ein Verteilerbalken 20 vorgesehen. Mit diesem Verteilerbalken 20 kann die Kunststoffschmelze über Förderkanäle 21, 22 zentral in die Maschinenplatte 2 geführt werden, um von dort in Mehrfachwerkzeuge 23, 24 geleitet zu werden. Durch die Verwendung mehrerer Spritzaggregate können mehrschichtige Formlinge, wie sie heute insbesondere für Lebensmittelverpackungen und insbesondere in der Getränkeindustrie verwendet werden, hergestellt werden. Es zeigt sich, dass die erfindungsgemässe Anlage auch mit mehreren Spritzaggregaten keinen zusätzlichen Werkstoffaufwand an den Werkzeugen notwendig macht, und die gesamte Schliesseinheit 1 ihre Gestaltfestigkeit auch bei Verwendung von Werkzeugen mit 48 und mehr Formkavitäten beibehält. Dies erlaubt insbesondere die Verwendung von Standardwerkzeugen, die auch in einfachen Spritzeinheiten eingesetzt werden und sich dort bewährt haben. In einer Weiterbildung dieser Spritzgiessanlage kann ein zusätzliches Werkzeug (nicht dargestellt), dessen Schliessrichtung in Versorgungsrichtung 34 verläuft, an die feste Maschinenplatte 2 angebracht werden, ohne dabei Biegemomente auf diese mittlere Maschinenplatte 2 zu erzeugen.

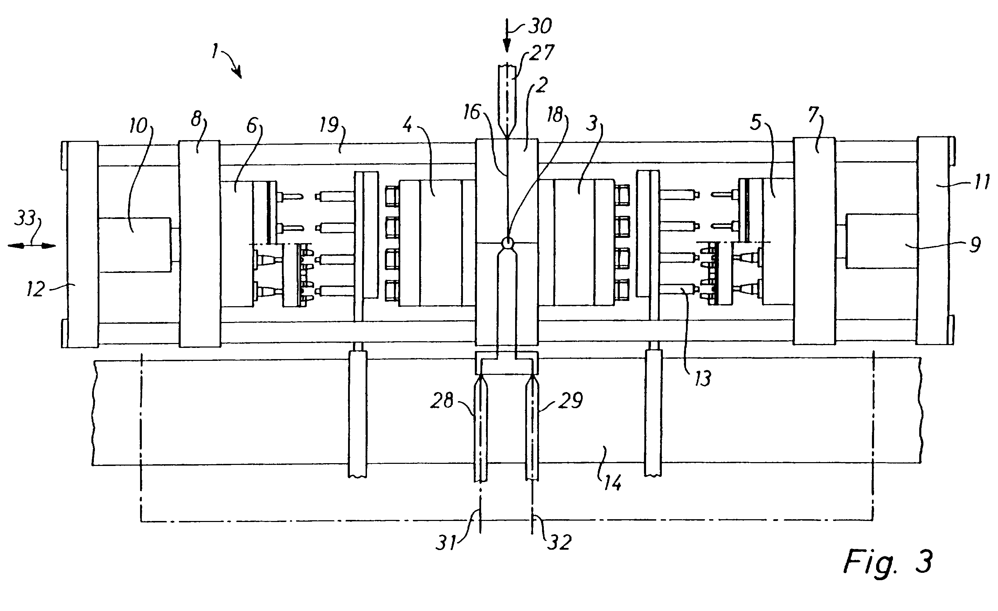

Die in Figur 3 dargestellte Ausführungsform der erfindungsgemässen Spritzgiessanlage zeigt eine Weiterbildung mit drei Spritzaggregaten 27, 28, 29. Die Förderrichtung 30, 31, 32 dieser Spritzaggregate steht wiederum senkrecht zur Schliessrichtung 33 der paarweise angeordneten Werkzeuge. Mit dieser Anlage können mehrschichtige Formteile betriebssicher und verschleissarm hergestellt werden. Auch bei dieser Vorrichtung treten keine Biegemoment auf, die im Spritzgiessbetrieb zu Bauteilverformungen führen könnten.

Es versteht sich, dass diese Anlage vom Fachmann weiter modifiziert werden kann. So brauchen die Formwerkzeuge bspw. nicht in einer Ebene zu liegen, sondern können paarweise axialsymmetrisch zur Förderachse angeordnet sein. Bei einer solchen Anordnung können mehrere Werkzeugpaare um die Fördersachse verteilt sein und können die einzelnen synchron miteinander arbeitenden Werkzeugpaare nacheinander getaktet werden.

## Patentansprüche

1. Spritzgiessanlage für die Herstellung von Formteilen aus plastifiziertem Kunststoff mit mindestens einer Dosier- und Fördervorrichtung, sowie mit einer Schliesseinheit (1) für mindestens zwei paarweise angeordnete Formwerkzeuge (3,5;4,6) mit mehreren Kavitäten, wobei die Schliessrichtung der paarweise angeordneten Formwerkzeuge (3,5;4,6) senkrecht zur Förderrichtung (16) der mindestens einen Dosier- und Fördervorrichtung steht, dadurch gekennzeichnet, dass die mindestens eine Dosier- und Fördervorrichtung ein Spritzaggregat (17) für Formwerkzeuge ist, welche Formwerkzeuge (3,5; 4,6) Mehrfach-Heisskanal-Standardwerkzeuge mit 48 oder mehr Formkavitäten sind und dass, zur Vermeidung von Biegemomenten innerhalb oder zwischen den einzelnen Werkzeugplatten, die Schliesseinheit (1) eine als feste Maschinenplatte des Spritzaggregats (17) ausgebildete Verteilerplatte (2) aufweist.

2. Spritzgiessanlage nach Anspruch 1, dadurch gekennzeichnet, dass die Formwerkzeuge (3,5;4,6) paarweise axialsymmetrisch zur Förderrichtung (16) des mindestens einen Spritzaggregats (17) angeordnet sind.

3. Spritzgiessanlage nach einem der Ansprüche 1 oder 2, dadurch gekennzeichnet, dass die Formwerkzeuge (3,5;4,6) Mehrfach-Heisskanal-Koinjektions-Werkzeuge sind.

4. Spritzgiessanlage nach einem der vorgehenden Ansprüche, dadurch gekennzeichnet, dass die Verteilerplatte (2) ein zentral angeordnetes Ventil (18) zur Regelung der Schmelzenzufuhr an die Formwerkzeuge (3,5;4,6) aufweist.

5. Spritzgiessanlage nach einem der Ansprüche 1 bis 4, dadurch gekennzeichnet, dass die Schliesseinheit (1) mit dem mindestens einen Spritzaggregat (17) eine T-förmige Anlage bilden.

6. Spritzgiesseinheit nach Anspruch 5, dadurch gekennzeichnet, dass die Schliesseinheit (1) mit mindestens zwei einander gegenüberliegenden Spritzaggregaten (17) eine kreuzförmige Anlage bilden.

## Claims

1. An injection moulding installation for the manufacture of mould parts from plasticised synthetic material with at least one dosing and feeding device, as well as with a closure unit (1) for at least two mould tools (3,5;4,6) arranged in pairs and having several cavities, whereby said closure unit of said mould tools (3,5; 4,6) being arranged in pairs is perpendicular to the feed direction (16) of the at least one dosing and feeding device, characterised in that the at least one dosing and feeding device is an injection unit for mould tools, said mould tools (3,5; 4,6) being multiple hot-runner standard mould tools having 48 or more form cavities and that, to avoid bending moments within or between the individual tool plates, the closure unit (1) comprises a distributor plate (2) which is formed as a fixed machine plate of the injection unit (17).

2. Injection moulding installation according to claim 1, characterised in that the mould tools (3,5; 4,6) are arranged in pairs axially symmetrically to the feed direction (16) of the at least one injection unit (17).

3. Injection moulding installation according to one of claims 1 or 2, characterised in that the mould tools (3,5; 4,6) are multiple hot-runner co-injection tools.

4. Injection moulding installation according to one of the preceding claims, characterised in that the distributor plate (2) comprises a centrally arranged valve (18) for regulating the supply of melt to the mould tools (3,5; 4,6).

5. Injection moulding installation according to one of claims 1 to 4, characterised in that the closure unit (1) with the at least one injection unit (17) forms a T-shaped installation.

6. Injection moulding installation according to claim 5, characterised in that the closure unit (1) with at least two injection units (17) lying opposite one another form a cross-like installation.

## Revendications

1. Installation de moulage par injection pour la fabrication d'éléments moulés en matière plastique plastifiée, comportant au moins un dispositif de dosage et de transport, ainsi qu'une unité de fermeture (1) pour au moins deux moules de formage agencés par paires (3, 5; 4, 6), comportant plusieurs cavités, l'unité de fermeture des moules de formage agencés par paires (3, 5; 4, 6) étant agencée verticalement par rapport au dispositif de transport (16) du au moins un dispositif de dosage et de transport, caractérisée en ce que le au moins un dispositif de dosage et de transport est constitué par un groupe d'injection (17) pour moules de formage, ces moules de formage (3, 5; 4, 6) étant des moules standards à canaux chauds et à plusieurs empreintes comportant 48 cavités de formage ou plus, et qu'en vue d'empêcher des moments de flexion à l'intérieur des différentes plaques des moules ou entre celles-ci, l'unité de fermeture (1) comporte une plaque de distribution (2) ayant la forme d'une plaque de machine fixe du groupe d'injection (17).

2. Installation de moulage par injection selon la revendication 1, caractérisée en ce que les moules de formage (3, 5; 4, 6) sont agencés par paires, de façon axialement symétrique au sens de transport (16) du au moins un groupe d'injection (17).

3. Installation de moulage par injection selon l'une des revendications 1 ou 2, caractérisée en ce que les moules de formage (3, 5; 4, 6) sont des moules de co-injection à canaux chauffants et à plusieurs empreintes.

4. Installation de moulage par injection selon l'une des revendications précédentes, caractérisée en ce que la plaque de distribution (2) comporte une soupape à agencement central (18) destinée à régler l'amenée de la masse fondue vers les moules de formage (3, 5; 4, 6).

5. Installation de moulage par injection selon l'une des revendications 1 à 4, caractérisée en ce que l'unité de fermeture (1) forme avec le au moins un groupe d'injection (17) une installation en forme de T.

6. Installation de moulage par injection selon la revendicaiton 5, caractérisée en ce que l'unité de fermeture (1) forme avec au moins deux groupes d'injection opposés (17) une installation en forme de croix.
